# EUROPÄISCHE PATENTANMELDUNG

(11) **EP 3 831 631 A1**
(43) Veröffentlichungstag der Anmeldung: **09.06.2021**
(21) Anmeldenummer: 20182593.2
(22) Anmeldetag: 19.06.2020
(51) Int. Cl.: B60K 1/04, B62D 59/04, B62D 63/06

(54) **FREIZEITFAHRZEUG, INSBESONDERE WOHNANHÄNGER**

(30) Priorität: 19.06.2019 DE 102019116714
(71) Anmelder: HYMER Business Development GmbH, 88339 Bad Waldsee (DE)
(72) Erfinder: Kaiser, Ria, 21077 Hamburg (DE); Kasten, Ole, 21680 Stade (DE); Weltjen, Martin, 21726 Oldendorf (DE); Wulf, Mathis, 21680 Stade (DE)
(74) Vertreter: Waller, Stefan

(57) **Zusammenfassung**

Bei einem Freizeitfahrzeug, beispielsweise einem Anhänger, insbesondere einem Wohnanhänger (3), bei dem ein hinteres Tragelement (9) vorgesehen ist, wobei in einem Rahmen des Freizeitfahrzeugs (1) eine Energiespeichereinheit (4), insbesondere eine Batterie (5) mit hoher Energiedichte vorgesehen ist, und das hintere Tragelement (9) hinter dem Energiespeicher (4) angeordnet ist, ist an dem hinteren Tragelement (9) ein energieabsorbierendes Crashelement (11) angeordnet.

## Beschreibung

Die Erfindung betrifft eine Verwendung einer Crashstruktur in einem Freizeitfahrzeug, insbesondere gezogenen, zum Schutz von Energiespeichern und Insassen.

Unter einem Freizeitfahrzeug wird vorliegend ein Fahrzeug verstanden, dass zumindest mithilfe von in diesem montierbaren Einrichtungen und Möbeln dem Nutzer eine Möglichkeit zum Schlafen und Wohnen in diesem Fahrzeug bietet. Für eine anderweitige Verwendung, wenn das Fahrzeug nicht als Freizeitfahrzeug zum Campen benutzt wird, können diese Einrichtungen und Möbel zumindest zum Teil ohne großen Aufwand entfernt werden. Weiterhin umfasst der Begriff auch alle Campingfahrzeuge wie Wohnmobile und Wohnwagen, wobei eine Motorisierung der Fahrzeuge nicht erforderlich ist und ein Freizeitfahrzeug insbesondere einen Anhänger umfasst. Solche Freizeitfahrzeuge zeichnen sich durch einen größeren Wohnaufbau aus, wobei in der überwiegenden Anzahl der Fälle nicht die Originalkarosserie beispielsweise eines Kleintransporters zum Einsatz kommt, sondern ein größerer Aufbau von dem Hersteller des Freizeitfahrzeugs auf einem Chassis aufgebaute wird. Bei einem Wohnanhänger als Freizeitfahrzeug wird regelmäßig ein Anhängerchassis genutzt, auf dem ein Wohnaufbau speziell aufgebaut wird.

Es ist bekannt, dass Batteriesysteme oder Kraftstofftanks auf Reach-Extendern als Anhängern zur Reichweitenerhöhung montiert werden. Weiterhin ist bekannt, dass die Traktionsbatterien bei einem einachsigen Anhänger oberhalb der Achse montiert werden kann. Ein Beispiel eines solchen Anhängers zur Erweiterung der Reichweite ist aus der US 5,559,420 A bekannt, die einen einachsigen Anhänger mit einer Batterie beschreibt, über den dem ziehenden Fahrzeug zusätzliche Energie zugeführt wird.

Aus dem Stand der Technik sind auch mehrachsige Fahrzeuge bekannt, bei denen der Energiespeicher zwischen den Achsen positioniert ist.

Weiterhin kommen bereits Crashstrukturen/-absorber zum Schutz von Kraftstoffspeichern, insbesondere Batteriesystemen/Traktionsbatterien sowie Insassen in Personenkraftwagen verpflichtend sowohl seitlich als auch im Heckbereich zum Einsatz. Dadurch wird bei Elektrofahrzeugen mit einer Batterie beispielsweise eine Intrusion der Karosserie in den Batteriebereich unterbunden.

Weiterhin ist bekannt, dass innenliegende Stützrahmen bei Fahrzeuganhängern zum Einsatz kommen, die eine versteifende Wirkung für das Anhängerchassis aufweisen und einen zusätzlichen Support des Lastbodens darstellen. Insbesondere bei Anhängern zum Autotransport und Schwerlastanhängern ist dies bekannt.

Auch ist bekannt, dass ein Crashelement als Anhänger hinter einem Fahrzeug hergezogen wird, um das Zugfahrzeug zu schützen, zur Absicherung von Baustellen an Verkehrswegen.

Weiterhin ist bekannt, dass Deformationselemente existieren und verschiedenen Geometrien und Werkstoffkombinationen aufweisen können.

Bisher werden noch keine Wohnanhänger mit Traktionsbatterien regelmäßig eingesetzt, die zur Erhöhung der Reichweite Energie an das Zugfahrzeug abgeben oder selbst angetriebene Räder aufweisen.

Aufgrund der günstigen Komponenten in einem Standard-Anhänger-Chassis und da bei einem Caravan bzw. Wohnanhänger sich keine Personen während der Fahrt in diesem aufhalten dürfen, liegt bisher keine Notwendigkeit vor, das Chassis besonders zu schützen. In einem Schadensfall ist eine aufwändige Reparatur meist nicht lohnend.

Dies ändert sich jedoch bei einem angetriebenen oder eine Traktionsbatterie mitführenden Chassis. Bei einem Unfall, insbesondere Auffahrunfall, können die Batterien beschädigt werden, was aufgrund der Batteriechemie und der hohen Energiedichte zu einer stark exothermen Reaktion führt, und eine Gefahr für sich in der Nähe befindliche Personen als auch die Umwelt darstellen kann. Bisherige erhältliche Traktionsbatterien sind zudem nicht speziell für den Einsatz in Anhängern vorgesehen, sodass diese nicht zur Aufnahme möglicher kontaktierender Kräfte ausgelegt sind.

Die Entwicklung eines Batteriegehäuses, das zur Aufnahme der Kräfte in der Lage ist, ist sehr teuer. Wünschenswert ist daher die Vermeidung von Kontakt-/oder an beliebiger Stelle auftretenden Punktlasten auf die Traktionsbatterie.

Bekannt sind auch spezielle Crashelemente an der Rückseite eines Fahrzeugs. Ein solches wird beispielsweise offenbart durch die EP 2 115 221 B1.

Es ist daher Aufgabe der vorliegenden Erfindung, ein Freizeitfahrzeug, insbesondere einen Wohnanhänger zur Verfügung zu stellen, bei dem die zuvor genannten Nachteile vermieden werden und eine Traktionsbatterie sicher mitgeführt werden kann.

Diese Aufgabe wird durch ein Freizeitfahrzeug mit den Merkmalen des unabhängigen Patentanspruchs 1 gelöst. Vorteilhafte Weiterbildungen der Erfindung sind in den Unteransprüchen angegeben.

Vorteilhaft ist bei einem Freizeitfahrzeug, beispielsweise einem Anhänger, insbesondere einem Wohnanhänger, bei dem ein hinteres Tragelement vorgesehen ist, wobei in einem Rahmen des Freizeitfahrzeugs eine Energiespeichereinheit, insbesondere eine Batterie mit hoher Energiedichte vorgesehen ist und wobei das hintere Tragelement hinter dem Energiespeicher angeordnet ist, an dem hinteren Tragelement ein energieabsorbierendes Crashelement angeordnet.

Dadurch erfolgt die Integration eines Energieabsorber-Elements bzw. Crashelements in die Chassisstruktur eines Freizeitfahrzeugs, insbesondere eines Wohnwagens, aber auch eines Anhängerchassis im Allgemeinen. Vorteilhaft gewährleistet dieser Aufbau eine Entkopplung der auf das Chassis wirkenden Kräfte bei einem Unfall von dem Energiespeicher. Hierdurch können auch Energiespeicher ausgewählt werden, die nicht speziell auf den Einsatz in diesem Umfeld ausgelegt wurden. Dadurch reduzieren sich die Entwicklungskosten, da beispielsweise kein spezielles Batteriegehäuse benötigt wird und in der Folge verringert sich auch das Batteriegewicht. Es ist etwa auch ein Bezug einer Traktionsbatterie als Energiespeicher von üblichen Lieferanten möglich. Da weiterhin das Chassis allein bereits den Schutz des Energiespeichers übernimmt, können verschiedene Aufsätze auf das Chassis gesetzt werden, ohne dass einzeln Nachweise über die Sicherheit geführt werden müssen. Zusätzlich werden bei einem Crashereignis mit niedriger Aufprallenergie auch die Strukturen des Chassis wie auch der Energiespeicher, insbesondere eine Traktionsbatterie, gegen Beschädigungen geschützt. Dadurch kann ein wirtschaftlicher Totalschaden leichter vermieden werden.

Das hintere Tragelement kann ein Querträger sein.

Der Querträger kann dabei als offenes oder als Hohlprofil ausgeführt sein und sich beispielsweise auf mindestens zwei, in Fahrrichtung längs angeordnete Längsträger abstützen, mit denen er mechanisch verbunden ist. Kräfte bei einem Crash werden somit direkt auf diese Längsträger übertragen und das Tragelement als Querträger schirmt den Energiespeicher vor Krafteinwirkungen ab.

Das Crashelement kann auf dem Querträger befestigt sein.

Das Crashelement kann beispielsweise auf dem Querträger strukturell befestigt sein.

In einer vorteilhaften Ausgestaltung besteht das Crashelement über die Breite verteilt aus mehreren Teilen.

Dies ermöglicht einen partiellen Austausch bei Beschädigung und verringert somit Reparaturkosten.

Vorteilhaft ist das Crashelement aus einer Wabenstruktur aufgebaut, insbesondere einer Aluminium-Wabenstruktur.

In einer günstigen Weiterbildung umfasst das Crashelement einen Schaumwerkstoff, Kunststoff-Composite-Struktur und/oder ein Hohlprofil mit einer definierten Schwächung.

Es ist auch eine Umsetzung des Crashelements in Kunststoff, Metall oder Faserverbund denkbar. Der Schaumwerkstoff kann in Kunststoff oder Metall ausgeführt sein.

Vor dem Tragelement kann ein Energiespeicher-Querträger vorgesehen sein, an dem der Energiespeicher gelagert ist und der von dem Tragelement entkoppelt ist.

Indem der Energiespeicher an einem eigenen Querträger gelagert ist, der getrennt von dem Tragelement oder einem Querträger als Tragelement ist, wird eine Entkoppelung der Kräfte erreicht.

Der Energiespeicher kann zwischen Längsträgern angeordnet sein.

Vorteilhaft sind die Längsträger als Innenlängsträger von weiteren Längsträgern als Außenlängsträger jeweils seitlich umgeben.

Dadurch ergibt sich auch ein Aufprallschutz bei seitlichen Crashereignissen, da zunächst die Außenträger die Kräfte abfangen.

In einer weiteren günstigen Ausführungsform sind in Verlängerung der Innenträger und/oder Außenträger Crashelemente angeordnet, die von dem Tragelement in Form eines Querträgers verbunden werden.

Die Crashelemente könne auch in Längsträger integriert oder auf diese aufgeschraubt sein und über einen Querträger entsprechend dem Tragelement miteinander verbunden sind. Je nach Variante können die Crashelemente an den Außenträgern und/oder Innenträgern befestigt bzw. in diese integriert sein. Für eine bessere Kraftverteilung ist das Tragelement als ein Querträger vor bzw. in Fahrtrichtung hinter den Crashelementen angeordnet.

Das Freizeitfahrzeug kann ein Anhänger sein, insbesondere ein Wohnanhänger bzw. Caravan.

Das Freizeitfahrzeug kann ein Anhänger sein und angetriebene Räder aufweisen.

Bei Elektrofahrzeugen als Zugfahrzeug ist es zur Vermeidung von starken Beschränkungen der Reichweite vorteilhaft, wenn ein Caravan zum Ausgleich des durch den Anhänger erhöhten Fahrwiederstands einen eigenen Antrieb aus einem eigenen Energiespeicher aufweist.

Es kann eine Verkleidung vorgesehen werden, die als Sichtschutz und als Schutz vor äußeren Einflüssen dient. Diese kann auf das Crashelement aufgesetzt oder an diesem befestigt werden. Weiterhin ist eine Anbindung an mindestens einen Längsträger denkbar. Das Verkleidungselement kann als zweiter Querträger ausgeführt werden, der an den Längsträgern befestigt wird.

Weitere Vorteile und Einzelheiten der Erfindung werden anhand der in den schematischen Figuren dargestellten Ausführungsbeispiele näher erläutert. Hierbei zeigt
- Fig. 1: in Perspektivansicht den Heckbereich eines erfindungsgemäßen Freizeitfahrzeugs und
- Fig. 2: ebenfalls perspektivisch den Heckbereich eines weiteren Ausführungsbeispiels.

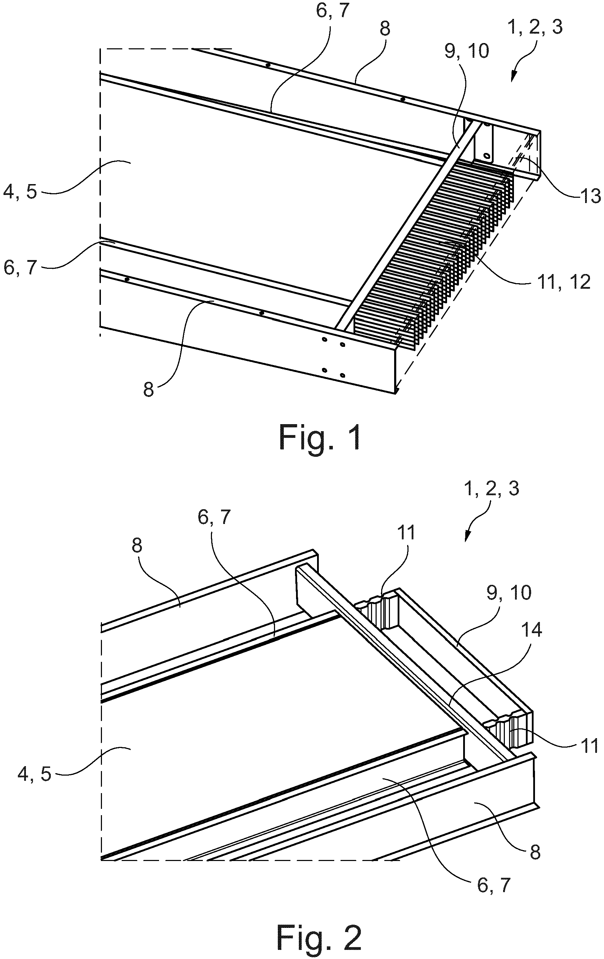

Die Fig. 1 zeigt in Perspektivansicht den Heckbereich eines erfindungsgemäßen Freizeitfahrzeugs 1 in dem vorliegenden Beispiel als Chassis 2 eines Wohnwagens 3. Ein Energiespeicher 4 in Form einer Traktionsbatterie 5 ist zwischen zwei Längsträgern 6 als Innenlängsträger 7 angeordnet. Außenlängsträger 8 sind jeweils seitlich außerhalb angeordnet. Ein Tragelement 9 in Form eines Querträgers 10 verbindet die Innenlängsträger 7 und Außenlängsträger 8. Auf dem Querträger 10 ist ein Crashelement 11 in Form einer Aluminium-Wabenstruktur 12 aufgesetzt. Diese ist durch eine durchscheinend dargestellte Verkleidung 13 bedeckt.

Bei einem Heckaufprall verformt sich das Crashelement 11 und leitet über den Querträger 10 die Aufprallkräfte direkt auf die Außenlängsträger 8 bzw. Innenlängsträger 7 ab. Der Energiespeicher 4 wird nicht oder nur in geringem Maße belastet.

Die Fig. 2 zeigt ebenfalls perspektivisch den Heckbereich eines weiteren Ausführungsbeispiels eines erfindungsgemäßen Freizeitfahrzeug 1, ebenfalls als Chassis 2 eines Wohnwagens 3. Einander entsprechende Elemente sind durch die gleichen Bezugszeichen gekennzeichnet. Der Energiespeicher 4 in Form einer Traktionsbatterie 5 ist an einem Energiespeicher-Querträger 14 gelagert, der die Innenlängsträger 7 und die Außenlängsträger 8 verbindet. In Verlängerung der Innenlängsträger 7 sind Crashelemente 11 angeordnet, die an der Heckseite durch ein Tragelement 9 in Form eines Querträgers 10 verbunden sind.

Dadurch werden bei einem Heckaufprall die von dem Querträger 10 aufgenommenen Aufprallkräfte in den Crashelementen 11 absorbiert und direkt auf die Innenlängsträger 7 abgestützt.

## Patentansprüche

1. Freizeitfahrzeug, beispielsweise ein Anhänger, insbesondere ein Wohnanhänger (3), bei dem ein hinteres Tragelement (9) vorgesehen ist, wobei in einem Rahmen des Freizeitfahrzeugs (1) eine Energiespeichereinheit (4), insbesondere eine Batterie (5) mit hoher Energiedichte vorgesehen ist, wobei das hintere Tragelement (9) hinter dem Energiespeicher (4) angeordnet ist,
**dadurch gekennzeichnet,**
**dass** an dem hinteren Tragelement (9) ein energieabsorbierendes Crashelement (11) angeordnet ist.

2. Freizeitfahrzeug nach Anspruch 1,
**dadurch gekennzeichnet,**
**dass** das hintere Tragelement (9) ein Querträger (10) ist.

3. Freizeitfahrzeug nach Anspruch 1 oder 2,
**dadurch gekennzeichnet,**
**dass** das Crashelement (11) auf dem Querträger (10) befestigt ist.

4. Freizeitfahrzeug nach Anspruch 3,
**dadurch gekennzeichnet,**
**dass** das Crashelement (11) über die Breite verteilt aus mehreren Teilen besteht.

5. Freizeitfahrzeug nach einem der vorhergehenden Ansprüche,
**dadurch gekennzeichnet,**
**dass** das Crashelement (11) aus einer Wabenstruktur aufgebaut ist, insbesondere einer Aluminium-Wabenstruktur.

6. Freizeitfahrzeug nach einem der vorhergehenden Ansprüche,
**dadurch gekennzeichnet,**
**dass** das Crashelement (11) einen Schaumwerkstoff, Kunststoff-Composite-Struktur, und/oder ein Hohlprofil mit einer definierten Schwächung umfasst.

7. Freizeitfahrzeug nach einem der vorhergehenden Ansprüche,
**dadurch gekennzeichnet,**
**dass** vor dem Tragelement (9) ein Energiespeicher-Querträger (14) vorgesehen ist, an dem der Energiespeicher (4) gelagert ist und der von dem Tragelement (9) entkoppelt ist.

8. Freizeitfahrzeug nach einem der vorhergehenden Ansprüche,
**dadurch gekennzeichnet,**
**dass** der Energiespeicher (4) zwischen Längsträgern (7) angeordnet ist.

9. Freizeitfahrzeug nach Anspruch 8,
**dadurch gekennzeichnet,**
**dass** die Längsträger als Innenlängsträger (7) von weiteren Längsträgern als Außenlängsträger (8) jeweils seitlich umgeben sind.

10. Freizeitfahrzeug nach Anspruch 8 oder 9,
**dadurch gekennzeichnet,**
**dass** in Verlängerung der Innenlängsträger (7) und/oder Außenlängsträger (8) Crashelemente (11) angeordnet sind, die von dem Tragelement (9) in Form eines Querträgers (10) verbunden werden.

11. Freizeitfahrzeug nach einem der vorhergehenden Ansprüche,
**dadurch gekennzeichnet,**
**dass** das Freizeitfahrzeug (1) ein Anhänger ist, insbesondere ein Wohnanhänger (3) bzw. Caravan.

12. Freizeitfahrzeug nach Anspruch 11,
**dadurch gekennzeichnet,**
**dass** das Freizeitfahrzeug (1) ein Anhänger ist und angetriebene Räder aufweist.
